Europäisches Patentamt

European Patent Office

Office européen des brevets

(19)

(11) Publication number : **0 233 845 B1**

# (12) EUROPEAN PATENT SPECIFICATION

(45) Date of publication of patent specification :
**04.03.92 Bulletin 92/10**

(21) Application number : **87830035.9**

(22) Date of filing : **28.01.87**

(51) Int. Cl.⁵ : **B60G 21/04**

(54) **Improvements in motor vehicle suspensions.**

(30) Priority : **31.01.86 IT 6707986**

(43) Date of publication of application :
**26.08.87 Bulletin 87/35**

(45) Publication of the grant of the patent :
**04.03.92 Bulletin 92/10**

(84) Designated Contracting States :
**DE ES FR GB SE**

(56) References cited :
**EP-A- 0 036 845**
**EP-A- 0 133 829**
**EP-A- 0 136 269**
**GB-A- 2 004 819**
**ENGINEERING MATERIALS AND DESIGN, vol.
27, no. 2, February 1983, pages 22-27, London,
GB; W.A. LEES: "Structural adhesives in man-
ufacture"**

(73) Proprietor : **FIAT AUTO S.p.A.
Corso Giovanni Agnelli 200
I-10135 Torino (IT)**

(72) Inventor : **Di Giusto, Nevio
Via Guarini 48
I-10078 Venaria (Torino) (IT)**
Inventor : **Gandiglio, Romolo
Viale Torino 33,
I-14019 Villanova d'Asti (Asti) (IT)**

(74) Representative : **Notaro, Giancarlo et al
c/o Jacobacci-Casetta & Perani S.p.A. Via
Alfieri, 17
I-10121 Torino (IT)**

Jouve, 18, rue Saint-Denis, 75001 PARIS

## Description

The present invention relates to motor-vehicle suspensions of the type indicated in the pre-characterising portion of the attached claim 1. A suspension of this type is known from EP-A-0 133 829. This known suspension has a torsion bar connecting the two trailing arms, a further torsion bar, and a cross-member which also connects the two trailing arms to each other. This cross-member has its end portions welded to the trailing arms and has a V-shaped cross-section with its cavity facing substantially forwardly of the vehicle.

The object of the present invention is to provide a suspension of the type specified above which has a simple and reliable structure, while at the same time being easy and cheap to manufacture.

The main characteristic of the suspension according to the invention is indicated in the characterising portion of the attached claim 1.

By virtue of this characteristic, the welding operation which is necessary in the suspension of the prior art is avoided, so that assembly of the suspension is easy and economic. Moreover, due to the location of the flat rebated surfaces of the cross-member in sensible proximity to the neutral axis of the V section, the forces to which the bolts or rivets are subject as a result of resilient torsional deformations of the cross-member during movement of the motor-vehicle are considerably reduced.

Furthermore, in a preferred embodiment, the two trailing arms are each constituted by two sheet metal half-shells having coupling surfaces welded together and having holes for engagement by the bolts or rivets. Preferably, a layer of adhesive is also interposed between the coupling surfaces of the trailing arms and the ends of the cross member in order to improve the strength of structure.

Further characteristics and advantages of the invention will become apparent from the description which follows with reference to the appended drawings, provided purely by way of non-limiting example, in which:

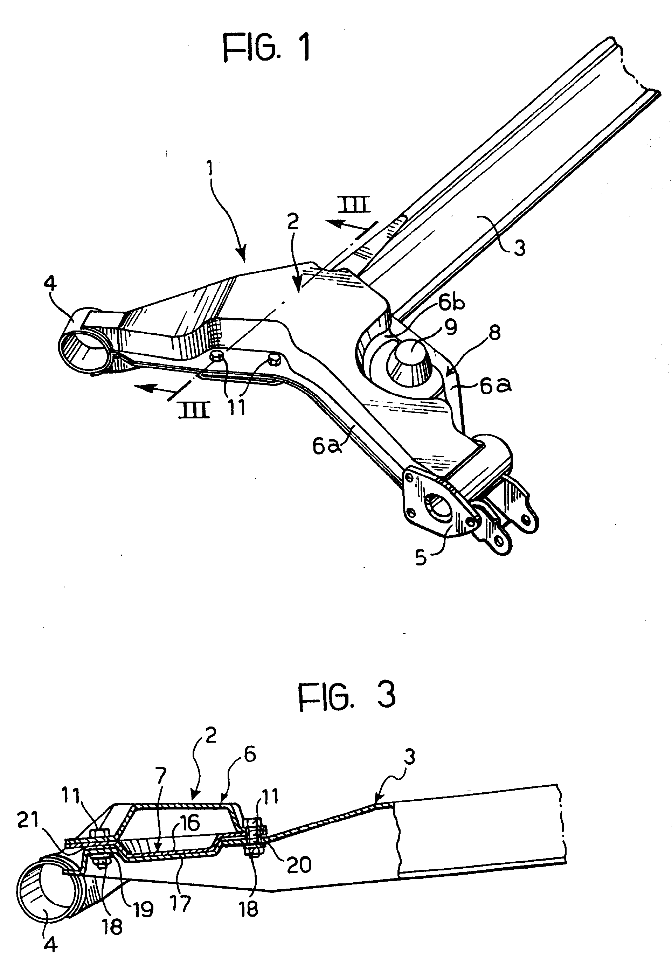

Figure 1 is a partial perspective view of a motor vehicle suspension according to the invention,

Figure 2 is an exploded perspective view of the suspension of Figure 1, and

Figure 3 is a sectional view taken on the line III-III of Figure 1.

The drawings illustrate, by way of example, a rear suspension 1 for a front-wheel-drive vehicle including two identical trailing arms 2 (only one of these arms is illustrated in the drawings) connected together at their intermediate zones by a cross member 3 which is resiliently deformable under torsion. Each arm 2 carries a bush 4 at one end for articulation to the body of the motor vehicle and a mounting 5 at its other end for the respective wheel.

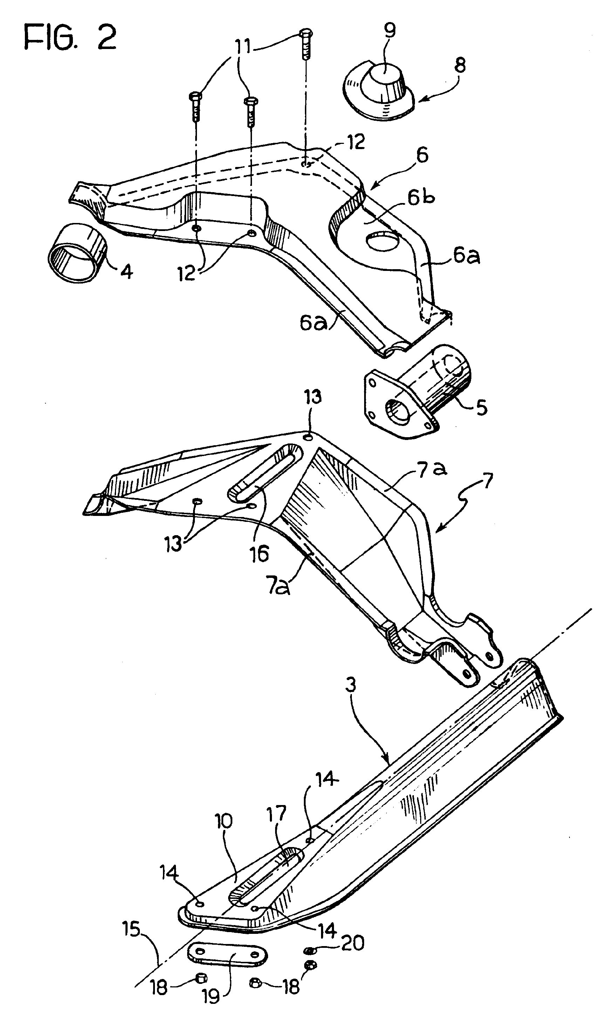

In the embodiment illustrated, the structure of each arm 2 is constituted by two sheet metal half-shells 6,7 (Figure 2) welded together along coupling surfaces constituted by longitudinal lateral flanges 6a, 7a. The two sheet metal half-shells 6, 7 are also welded to the wheel mounting 5, the bush 4 for articulation to the body, as well as an auxiliary member 8 having an upwardly-projecting frusto-conical portion 9 which is welded to a flat surface 6b of the upper element 6 of each arm 2. The appendage 9 is provided for centering the suspension spring associated with each arm 2. In a conventional manner, each of the two trailing arms also has an associated shock absorber.

The cross member 3 is constituted by an elongate sheet metal element having a cross-section substantially in the form of an inverted V with a flat rebated upper surface 10 at each end (Figure 2 illustrates only one end of the cross member 3, the opposite end being identical).

According to the invention, each end of the cross member 3 is connected to the respective trailing arm 2 by bolts or rivets. The embodiment illustrated relates to the case in which the connections are achieved by three screws 11 which engage holes 12, 13, 14 (Figure 2) formed in the respective coupling surfaces 6a, 7a and 10 of the two half-shells 6, 7 constituting each trailing arm 2 and of the cross member 3.

The flat surface 10 is located sensible on the neutral axis 15 (Figure 2) of the cross-section of the element 3 so as to reduce considerably the forces to which the connecting members are subject as a result of the torsional resilient deformations of the cross member 3 which occur when the two trailing arms 2 oscillate differently. The coupling surface of the lower half shell 7 of the arms 2 and the coupling surface 10 of the cross member 3 also have dished portions 16, 17 which cooperate with each other to facilitate the correct coupling of the elements.

The screws 11 cooperate with bolts 18 which bear against the lower surface of the cross member 3 with the interposition of a plate 19 and a washer 20. It is clear, however, that these constructional details could be varied widely with respect to that described and illustrated purely by way of example.

Again in the embodiment illustrated, a layer of adhesive 21 is interposed between the coupling surfaces of the lower half-shell 7 of the arm 2 and the cross member 3, which improves the strength of the structure.

By virtue of the characteristics described above, the suspension according to the invention has a simple and reliable structure which at the same time is easy and cheap to manufacture, particularly compared with known solutions in which the fixing is achieved by welding of the cross member 3 to the two trailing arms 2.

Naturally, the principle of the invention remaining the same, the forms of embodiment and details of construction may be varied widely with respect to that described purely by way of example, without thereby departing from the scope of the present invention, as defining by the claims.

## Claims

1. Motor-vehicle suspension of the type including a pair of trailing arms (2) articulated at one of their ends to the body of the motor-vehicle and carrying wheel mountings (5) at their opposite ends, and a cross-member (3) constituted by an elongate sheet metal element with a V-shaped cross-section, which is resiliently deformable under torsion and interconnects the intermediate zones of the two arms (2), each arm (2) being provided with means (8,9) for supporting a respective spring and a respective shock absorber, wherein the cross-member (3) has end portions each with a flat upper surface (10) fixed to the respective trailing arm (2), characterised in that said cross-member (3) is the only existing connection between the two trailing arms (2) and is arranged with the cavity of its V-shaped cross-section facing downwardly, said upper surface (10) of each end portion of the cross-member (3) being a rebated surface located sensibly on the neutral axis (15) of the V section, said end portions being fixed to the trailing arms (2) by bolts or rivets (11, 18) engaging holes (14) formed in said flat rebated upper surface (10).

2. Suspension according to Claim 1, characterised in that each of the two trailing arms (2) is constituted by two sheet metal half-shells (6, 7) having coupling surfaces (6a, 7a) welded together and having the holes (12, 13) for engagement by the bolts (11, 18) or rivets.

3. Suspension according to Claim 2, characterised in that a layer of adhesive (21) is interposed between the coupling surfaces of the trailing arms (2) and the cross member (3).

4. Suspension according to Claim 1, characterised in that the said flat surface (10) of the cross member and the corresponding coupling surface of the respective trailing arm (2) have dished portions (16,17) which cooperate with each other to facilitate the correct coupling of these elements.

## Patentansprüche

1. Kraftfahrzeug-Aufhängung mit einem Paar von hinteren Lenkern (2), die mit einem ihrer Enden gelenkig mit der Karosserie des Kraftfahrzeugs verbunden sind und an ihren entgegengesetzten Enden Radbefestigungsvorrichtungen (5) tragen, sowie mit einem aus einem langgestreckten Blechelement mit V-förmigem Querschnitt bestehenden Traversenteil (3), das unter Torsion elastisch verformbar ist und die Mittelzonen der beiden Lenker (2) miteinander verbindet, wobei Jeder der Lenker (2) Mittel (8, 9) zur Halterung einer entsprechenden Feder und eines entsprechenden Schwingungsdämpfers aufweist und wobei das Traversenteil (3) Endbereiche mit einer flachen Oberseite (10) besitzt, die an dem zugehörigen hinteren Lenker (2) befestigt ist, dadurch gekennzeichnet, daß das Traversenteil (3) die einzige existierende Verbindung zwischen den beiden hinteren Lenkern (2) darstellt und so angeordnet ist, daß die Hohlseite ihres V-förmigen Querschnitts nach unten weist, daß die genannte Oberseite (10) Jedes Endbereichs des Traversenteils (3) eine versetzte Fläche ist, die etwa auf der neutralen Achse (15) des V-förmigen Querschnitts liegt, und daß die genannten Endbereiche an den hinteren Lenkern (2) durch Schrauben (11, 18) oder Nieten befestigt sind, die in an der genannten versetzten Fläche (10) der Oberseite ausgebildete Bohrungen (14) eingreifen.

2. Aufhängung nach Anspruch 1, dadurch gekennzeichnet, daß Jeder der beiden hinteren Lenker (2) aus zwei Halbschalen (6, 7) aus Blech besteht, die zusammengeschweißte Verbindungsflächen (6a, 7a) besitzen, die Bohrungen (12, 13) aufweisen, in die die Schrauben (11, 18) oder Nieten eingreifen können.

3. Aufhängung nach Anspruch 2, dadurch gekennzeichnet, daß zwischen den Verbindungsflächen der hinteren Lenker (2) und des Traversenteils (3) eine Klebstoffschicht (21) eingefügt ist.

4. Aufhängung nach Anspruch 1, dadurch gekennzeichnet, daß die flache Fläche (10) des Traversenteils und die korrespondierenden Verbindungsfläche des betreffenden hinteren Lenkers (2) zusammenwirkende tiefgezogene Abschnitte (16, 17) besitzen zur Erleichterung der korrekten Verbindung zwischen diesen Elementen.

## Revendications

1. Suspension de véhicule à moteur du type comprenant une paire de bras tirés (2) articulés à la caisse du véhicule à moteur à l'une de leurs extrémités et portant des supports de roues (5) à leur extrémité opposée, et une traverse (3) constituée par un élément de grande longueur en tôle à section en V, qui est capable de se déformer élastiquement en réponse à une torsion et qui relie les zones intermédiaires des deux bras (2), chaque bras (2) étant équipé de moyens (8, 9) destinés à supporter un ressort respectif et un amortisseur respectif, dans lequel la traverse (3) possède des parties d'extrémité, chacune munie d'une surface supérieure plate (10) fixée au bras tiré (2) respectif, caractérisée en ce que ladite traverse (3) constitue la seule liaison existant entre les deux bras tirés (2) et est disposée de façon que la cavité de sa section en V soit dirigée vers le bas, ladite surface supérieure (10) de chaque partie d'extrémité de la traverse (3) étant une surface plate surbaissée placée sensiblement sur l'axe neutre (15) de la section en V, lesdites parties d'extrémité étant fixées aux bras tirés (2) par /des boulons ou rivets (11, 18) qui coopèrent avec des trous (14) formés dans ladite surface supérieure plate surbaissée (10).

2. Suspension selon la revendication 1, caractérisée en ce que chacun des deux bras tirés (2) est composé de deux demi-coquilles en tôle (6, 7) qui possède des surfaces d'assemblage (6a, 7a) soudées l'une à l'autre et qui présentent les trous (12, 13) avec lesquels coopèrent les boulons (11, 18) ou les rivets.

3. Suspension selon la revendication 2, caractérisée en ce qu'une couche d'adhésif (21) est interposée entre les surfaces d'assemblage des bras tirés (2) et de la traverse (3).

4. Suspension selon la revendication 1, caractérisée en ce que ladite surface plate (10) de la traverse et la surface d'assemblage correspondante du bras tiré (2) présentent des portions embouties (16, 17) qui coopèrent entre elles pour faciliter l'assemblage correct de ces éléments.

FIG. 1

FIG. 3

# FIG. 2